(19) Europäisches Patentamt
European Patent Office
Office européen des brevets

(11) **EP 3 409 358 A1**

(12) **EUROPEAN PATENT APPLICATION**

(43) Date of publication:
**05.12.2018 Bulletin 2018/49**

(51) Int Cl.:
**B01J 29/068** [(2006.01)]          **B01J 29/22** [(2006.01)]
**B01J 29/44** [(2006.01)]          **B01D 53/94** [(2006.01)]
**B01J 35/00** [(2006.01)]          **B01J 35/10** [(2006.01)]

(21) Application number: **17174071.5**

(22) Date of filing: **01.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **PAUL SCHERRER INSTITUT**
**5232 Villigen PSI (CH)**

(72) Inventors:
• **KRÖCHER, Oliver**
  **5313 Klingnau (CH)**
• **VAN BOKHOVEN, Jeroen A.**
  **8044 Zürich (CH)**
• **PETROV, Andrey**
  **5200 Brugg (CH)**

(74) Representative: **Fischer, Michael**
  **Siemens AG**
  **Postfach 22 16 34**
  **80506 München (DE)**

(54) **METHOD FOR PREPARING A SINTERING RESISTANT ALKALI METAL-ZEOLITE SUPPORTED METAL CATALYST FOR METHANE OXIDATION**

(57)     It is the objective of the present invention to provide a method for preparing a sintering resistant alkali-zeolite supported metal catalyst for catalytic methane oxidation that does not degrade by particle sintering and zeolite framework dealumination.

This objective is achieved according to the present invention by a method for producing a precious metal/metal cation zeolite catalyst, hereinafter referred to as PM/MC-zeolite catalyst, for selective catalytic methane oxidation, comprising the steps of:

a) treating a parent zeolite under desilication conditions in order to form mesopores (hereinafter referred to as nanocages) resulting in a desilicated zeolite;
b) treating the desilicated zeolite in order to selectively extract extra-framework aluminum and surface framework aluminum, respectively, resulting in an acidic H-zeolite;
c) loading the acidic H-zeolite with a precious metal compound by ion-exchange, impregnation or other technique and subsequent calcination resulting in an acidic PM/H-zeolite;
d) neutralizing the strong acid sites of the PM/H-zeolite by a basic alkali metal salt or a base, and thus stabilize the precious metal within the nanocages of the zeolite.

This method yields a hydrothermally stable sintering resistant methane oxidation catalyst. Both problems mentioned above are solved by the synthetic approach based on the removal of the acid sites of the parent PM/H-zeolite by post-exchanging it with an alkali cation, which resulted in capturing nano-sized PM particles within a zeolitic hierarchical structure and stabilization of the framework aluminum.

FIG 5

**Description**

The present invention relates to a catalytic material characterized by sintering-resistance of a highly dispersed active transition metal. Further, the present invention relates to a method for preparing a sintering resistant alkali-zeolite supported metal catalyst for catalytic oxidation, preferably methane oxidation.

Lean-burn natural gas vehicles are a promising mid-term alternative to gasoline and diesel vehicles due to the higher energy density of methane and lower carbon dioxide and $NO_x$ emissions. However, lean-burn operation of a natural gas engine results in incomplete combustion of methane, the major component of natural gas. It is compulsory to control methane emissions as it has an about 20 times larger global warming potential than carbon dioxide. For this purpose, catalytic exhaust gas aftertreatment system is used, which is usually based on conventional materials like $Pd/Al_2O_3$ and its modifications by ceria-zirconia solid solutions. However, such systems invariably have poor hydrothermal stability and palladium sintering represents the main reason for deactivation. Stabilization of small nanoparticles is crucial for improving efficiency stability and driving down costs, especially in applications, which rely on the use of precious metals. Developing materials which remain highly active during exposure to severe conditions with high steam concentration is essential to implement the use of natural gas powered vehicles and power generation systems.

Some early publications reported that palladium supported on zeolite is a highly active material for complete methane oxidation. High silicon to aluminum (Si/Al) ratio in Pd/ZSM-5 and Pd/beta is beneficial for the activity and stability due to higher hydrophobicity and stability of the zeolite support. However, achieving high dispersion of palladium on high silica zeolites is challenging due to their high hydrophobicity and small ion exchange capacity, which do not allow incorporation of palladium into the zeolite pores. US patent applications 2016/0059226, 2016/0310895 describe a method of preparing platinum group metal (PGM) high-silica zeolite or titanium silicate with highly dispersed active metal, which is achieved by the use of special precursors and calcination in a protective (inert) gas. The authors attributed the higher activity and stability of the obtained catalyst to the hydrophobicity of the support.

Patent application 2016/0236147 describes palladium on a high-silica zeolite as methane oxidation catalyst and claims that the presence of stable silanol groups is a crucial factor for the stability of the catalyst. US patent 8,685,876 describes the oxidation catalyst based on platinum and zeolite beta, which has a relatively low tendency to sintering due to the capturing of reduced platinum particles within the micropore structure of the support. However, its efficiency for complete methane oxidation has not been demonstrated, likely due to the fact that platinum based catalysts are generally much less active in this reaction compared to palladium based catalysts.

Several publications included comparison between Na and H forms of the zeolite. For example, Maeda et al. compared Pd/H-MOR and Pd/Na-MOR with various Si/Al ratios and concluded that very high Si/Al ratio (260) as well as presence of sodium cations in the zeolite had detrimental effect on the activity and stability. On the contrary, earlier works by Montes de Correa et al. and Li et al. showed that the activity of Pd/Na-zeolites can be positively correlated with the Na/Pd ratio in the final catalyst. In the above mentioned works sodium was either initially present in the parent zeolite, or was added by ion-exchange prior to the exchange with palladium. The latter treatment is known to produce only partly-exchanged zeolites.

For instance, Maeda et al. mentioned that ion-exchange procedure led only to 46% cation exchange in the case of Na-mordenite with Si/Al ratio of 51. The preparation routes described above resulted in active materials, which, however, lacked long-term stability.

Recently, Lou et al. prepared Pd/H-ZSM-5 from $PdCl_2$ by controlling the synthesis pH using sodium hydroxide. The most active catalyst was prepared at the pH = 8 and the authors speculated that ionically dispersed $[AlO_2]$ Pd(OH)-ZSM-5 is the active species. However, no microscopic or spectroscopic proof of existence of such species was provided. Additionally, the authors did not address the possible influence of sodium on the catalytic performance, since it was obviously not washed away after the synthesis, and the NMR spectra of the catalysts denoted as Pd/H-ZSM-5 suggest that it was rather Pd/Na-ZSM-5, based on the absence of the extra-framework octahedral aluminum resonance.

Pd/zeolite catalysts provide high activity in methane oxidation, but they deactivate rapidly under reaction conditions and in the presence of steam due to extensive palladium nanoparticle sintering. Descorme et al. proposed that acidity of the zeolite could enhance the mobility of palladium over the support under reaction conditions, which eventually results in particle growth. In addition, dealumination degrades the zeolite crystallinity and leads to the formation of acidic extra-framework aluminum species, which further promote palladium sintering. US patent 9221038 describes metal-containing crystalline boro-silicate, gallo-silicate and titanium silicate based oxidation catalysts, wherein the strong Brønsted acid sites, formed by incorporation of boron and gallium in the crystalline silicate matrix, are exchanged with a metal and then eliminated by high temperature calcination, resulting in a crystalline high-silica metal-loaded silicate, free of Brønsted acid sites. Elimination of the framework Brønsted acid sites by high temperature calcination, however, leads to the formation of extra-framework species, which exhibit Lewis acidity. Therefore complete elimination of residual acidity, which causes the catalyst deactivation, is not possible by this method.

It is therefore the objective of the present invention to provide a method for preparing a sintering resistant zeolite supported metal catalyst free of residual acidity for catalytic methane oxidation that does not degrade by particle sintering and zeolite framework dealumination.

With respect to the catalytic material, the objective is achieved according to the present invention by a catalytic material characterized by sintering-resistance of a highly dispersed active transition metal, especially in the presence of steam and at high temperatures, stabilized within a zeolitic support, in which the excess of acidity of the zeolitic support is balanced by an alkali metal cation (Li, Na, K, Rb, Cs or a mixture thereof).

Compared to the state-of-the art, this catalytic material does not degrade due to particle sintering of the highly dispersed active transition metal and the dealumination of the zeolitic support, thus providing higher activity and stability for catalytic oxidation reactions, for instance, catalytic methane oxidation, also in the presence of steam in the feed.

According to a preferred embodiment of the present invention, the material may be characterized by the absence of strong acid sites, evidenced by the absence of desorption peaks above 250°C in an ammonia temperature programmed desorption experiment ($NH_3$-TPD) in a flow of an inert gas.

Preferably, the material is characterized by the chemical formula $A_k M^{z+}_{(l/z)} T_m Si_n O_{2 \times (m+n)}$,

where A - alkali metal, M - active transition metal, T - framework-substituted heteroatom of the zeolitic support, z - oxidation number of the active transition metal M and the ratio (k+l/z)/m = 1 $\pm$ 0.15. Further, the material may be essentially free of extra-framework heteroatoms and framework heteroatoms on the external surface of the zeolitic support.

A further preferred embodiment of the present invention may provided for a material where the zeolitic material exhibits an intracrystalline secondary pore structure with the minimum pore diameter of at least two times larger than the zeolitic material micropore diameter.

Suitable active transition metals may be Pd, Rh, Pt, Ir, Fe, Ni, Co, Au, Ag, Cu, Zn, Cr or a mixture thereof. Additionally or alternatively, the framework-substituted heteroatom of the zeolitic support may be chosen from the chemical elements of groups III and IV, preferably one or more of B, Al, Ga, Ti or Zr.

With respect to the method, this objective is achieved according to the present invention by a method for producing a precious metal/metal cation zeolite catalyst, hereinafter referred to as PM/MC-zeolite catalyst, for catalytic complete methane oxidation, comprising the steps of:

a) treating a parent zeolite under desilication conditions in order to form mesopores (hereinafter referred to as nanocages) resulting in a desilicated zeolite;
b) treating the desilicated zeolite in order to selectively extract extra-framework aluminum and surface framework aluminum, respectively, resulting in an acidic H-zeolite;
c) loading the acidic H-zeolite with a precious metal compound by ion-exchange, impregnation or other technique and subsequent calcination resulting in an acidic PM/H-zeolite;
d) neutralizing the strong acid sites of the PM/H-zeolite by a basic alkali metal salt or a base, and thus stabilize the precious metal within the nanocages of the zeolite.

Compared to the state of the art, this method yields a completely exchanged metal-containing alkali-zeolite, which is essentially free of residual acidity and can be used as a hydrothermally stable sintering resistant methane oxidation catalyst. Both problems, metal particle sintering and zeolite dealumination, are solved by the synthetic approach based on the removal of the acid sites of the parent PM/H-zeolite by post-exchanging it with an alkali cation, which resulted in capturing nano-sized PM particles within a zeolitic hierarchical structure and stabilization of the framework aluminum.

One preferred precious metal according to a preferred embodiment of the present invention is palladium, rhodium platinum, or a mixture thereof. Preferably, the precious metal compound can be a precious metal group ammine complex.

Preferred parent zeolite structures according to a preferred embodiment of the present invention are AEL, BEA, CHA, FAU, FER, LTA, LTL, MAZ, MOR, MEL, MFI, STI and TON.

Preferably, the desilication can be carried out under mild conditions wherein the desilication preferably produces a small amount (less than 0.1 $cm^3/g$) of mesopores (nanocages).

Further, the treatment of the desilicated zeolite can be carried out with nitric acid and/or oxalic acid.

Preferred examples of the present invention are hereinafter described in more detail with reference to the attached drawings which depict in:

Figure 1 (a) Light-off curves and (b) 65 h stability test of reference $Pd/Al_2O_3$ and various Pd/mordenite catalysts. Conditions: 1 vol. % $CH_4$, 4 vol. % $O_2$, 5 vol. % $H_2O$, bal. $N_2$; 415 °C;

Figure 2 Ammonia temperature programmed desorption thermograms ($NH_3$-TPD) of Pd/H-MOR and Pd/Na-MOR after dehydration at 550 °C for 30 min and saturation with 2500 ppm of $NH_3$ in nitrogen at 100 °C for 15 min;

Figure 3 STEM images of calcined and spent catalysts: (a,b) Pd/H-MOR, (c,d) Pd/Na-MOR. Spent catalysts were aged in 1 vo.% $CH_4$, 4 vol.% $O_2$, 5 vol.% $H_2O$, $N_2$ bal. at 415 °C for 16 h;

Figure 4 $^{27}$Al MAS NMR spectra of calcined and spent catalysts: Pd/H-MOR, Pd/Na-MOR and Pd/H-MOR-BE. Spent catalysts have been aged in 1 vol.% $CH_4$, 4 vol.% $O_2$, 5 vol.% $H_2O$, $N_2$ bal. at 415 °C for 16 h;

Figure 5 an overview of the various pretreatments of ZSM-5 (Clariant SM-27, Si/Al=13, $NH_4^+$-form); acid treatments were performed at 80°C under reflux for 4 h. Base treatment was performed at 65°C for 30 min;

Figure 6 an 20 h stability test of Pd/Na-ZSM-5 catalysts with various zeolite pretreatment; Conditions: 1 vol.% $CH_4$, 4 vol.% $O_2$, 5 vol.% $H_2O$, bal. $N_2$; 415 °C;

Figure 7 the transmission IR spectra of variously pretreated Pd/Na-ZSM-5 under vacuum at room temperature. The samples were evacuated at 400 °C for 2 h prior to the measurement;

Figure 8 the pore size distribution of variously pretreated Pd/Na-ZSM-5 obtained from fitting the argon physisorption isotherm at 77K;

Figure 9 the micrographs of Pd/i3002-Nox-Na crystallites: (a,b) calcined and (c,d) after 18 h on stream containing 1 vol.% $CH_4$, 4 vol.% $O_2$, 5 vol.% $H_2O$, bal. $N_2$, 415°C. (a,c) secondary electron images, (b,d) transmission electron images;

Figure 10 stability test of Pd/H-MOR, Pd/Na-MOR and PdRh/Na-MOR; Conditions: 1 vol.% $CH_4$, 4 vol.% $O_2$, 5 vol.% $H_2O$, bal. $N_2$; 415 °C; and

Figure 11 particle size distribution in Pd/H-MOR, Pd/Na-MOR and PdRh/Na-MOR before and after the catalytic test.

The present invention discloses a method for preparing a highly active and stable catalyst by alleviating the origins of catalyst deactivation: particle sintering and zeolite framework dealumination. Both problems were solved by the synthetic approach based on the complete removal of the acid sites of the parent Pd/H-zeolite by post-exchanging it with an alkali cation, which resulted in capturing nano-sized palladium particles within a zeolitic hierarchical structure and stabilization of the framework aluminum.

For example, using conventional ZSM-5 as a starting material the importance of the zeolite pretreatment is demonstrated, which can dramatically affect the activity and stability of the final Pd/Na-ZSM-5 catalyst. The present synthetic approach, comprising subsequent desilication, selective acid dealumination, precious metal exchange, such as palladium exchange, and removal of residual zeolite acidity by post-exchanging sodium, allows to turn unstable Pd/H-ZSM-5 into a highly active and stable Pd/Na-ZSM-5.

Mild desilication of a low-silica zeolite results in the formation of a small amount of mesopores (nanocages), where palladium particles can be confined. Additionally, aluminum distribution within the zeolite crystallite appears to be crucial for the long-term stability of the Pd/Na-zeolite. Treatment of desilicated zeolite with nitric and oxalic acids allows to selectively extract extra-framework aluminum and surface framework aluminum, respectively, both of which have detrimental effect on the stability of the final Pd/Na-zeolite catalyst.

Finally, titration of the acidic Pd/H-zeolite with a basic salt or a base (sodium bicarbonate or sodium hydroxide, for instance) allows to fully neutralize the strong acid sites of the zeolite, and thus stabilize the precious metal, i.e. palladium, within the nanocages of the zeolite, which yields a hydrothermally stable sintering resistant methane oxidation catalyst.

## Example 1. Effect of addition of sodium to mesoporous Pd/H-Mordenite

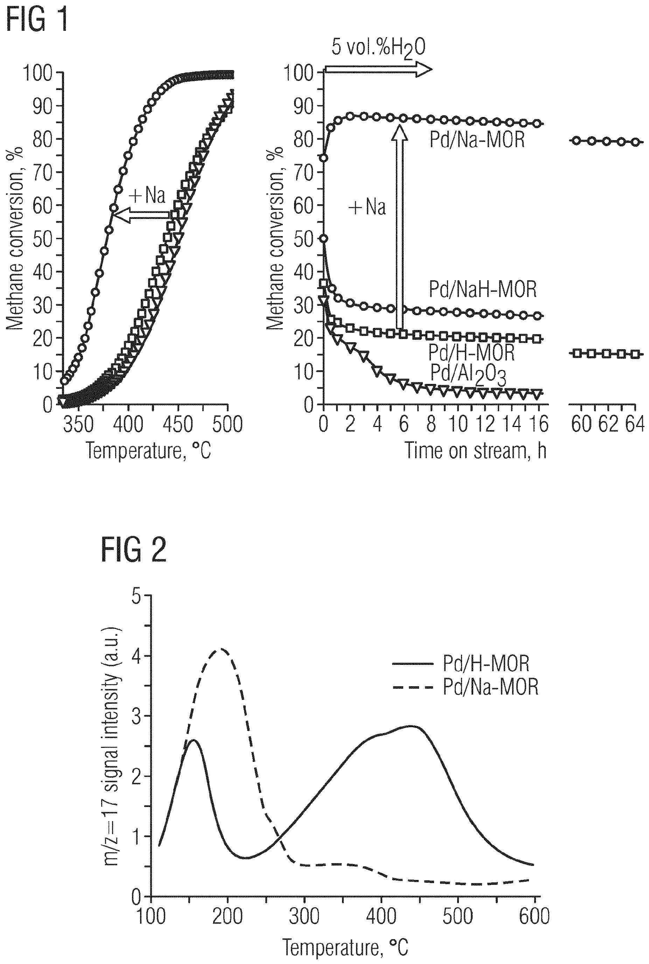

Pd/H-MOR and Pd/NaH-MOR were prepared from the parent dealuminated H-mordenite (Zeocat FM-8/H, Si/Al = 18) and its Na-exchanged form (1 M $NaNO_3$, 24 h, 3 times), respectively, by conventional ion-exchange with tetraammine palladium nitrate (pH = 7) and subsequent calcination at 500°C. Fully sodium-exchanged Pd/Na-MOR was obtained by titrating the residual acid sites of the parent Pd/H-MOR with 0.01 M sodium bicarbonate solution for 2 h until the pH of the slurry reached 7. Figure 1 shows the catalytic performance of Pd/H-MOR, Pd/NaH-MOR, Pd/Na-MOR and a reference Pd/$Al_2O_3$ catalyst prepared by wet impregnation in lean-burn methane oxidation. Pd/H-MOR and Pd/$Al_2O_3$ showed similar initial activity, providing 50% methane conversion ($T_{50}$, Figure Ia, Table 1) at 435 °C, whereas Pd/Na-MOR showed a shift of $T_{50}$ from 435 to 375 °C. The enhanced activity of Pd/Na-MOR was accompanied by a significant increase in stability (Figure 1b). The acidic catalysts, Pd/H-MOR and Pd/NaH-MOR, as well as reference Pd/$Al_2O_3$,

exhibited rapid deactivation within the first 4 h on stream, whereas Pd/Na-MOR showed an increase in activity. Hence, the initial 35% difference in conversion increased to 65% after ageing. Pd/NaH-MOR exhibited slightly higher activity than Pd/H-MOR, but deactivation profile (Figure 1b) remained similar.

**Table 1. Chemical composition and activity of variously prepared Pd/Na-MOR catalysts**.

| Sample | Synthesis method | Na content, wt. % | Pd content, wt. % | Methane conversion[a], % |
|---|---|---|---|---|
| Pd/Na-MOR-EE | Na post-exchange, pH = 8.5 (excess) | 3.0 | 0.74 | < 1 |
| Pd/Na-MOR | Na post-exchange, pH | 1.4 | 0.99 | 87 |
| | = 7 | | | |
| Pd/NaH-MOR-2 | Na pre-exchange (conventiona 1 route) | 0.8 | 0.96 | 58 |
| Pd/NaH-MOR | | 0.4 | 1.0 | 29 |
| Pd/H-MOR | - | 0.1 | 1.0 | 21 |
| [a] methane conversion after stabilization for 4 hours in the feed gas comprising 1 vol.% $CH_4$, 4 vol.% $O_2$, 5 vol.% $H_2O$, $N_2$ bal. , 415°C | | | | |

Figure 2 shows temperature programmed desorption curves of ammonia ($NH_3$-TPD) of Pd/H-MOR and Pd/Na-MOR. Pd/H-MOR exhibited two major peaks, one in the low temperature region (100-250 °C) and one in the high temperature region (Br∅nsted acid sites, 250-550 °C). Pd/Na-MOR exhibited predominantly a peak in the low temperature region. Addition of sodium caused almost the complete removal of the Brønsted acid sites of the zeolite. Additionally, the sodium-exchanged catalyst exhibited significantly larger amount of weakly adsorbed ammonia (100-250 °C) compared to the catalysts in the H-form.

Similarity of Pd/H-MOR and Pd/NaH-MOR and the superior performance of fully exchanged Pd/Na-MOR suggest that the acidity of the zeolite controls the catalytic behavior of the system. This was further confirmed by the extensive study of the effect of sodium loading on the activity of Pd/MOR (Table 1), which showed that the optimal amount of sodium corresponded to the fully exchanged acid sites of the zeolite. Addition of insufficient amounts of sodium did not significantly improve the performance of Pd/MOR, whereas excess of sodium caused rapid deactivation of the catalyst.

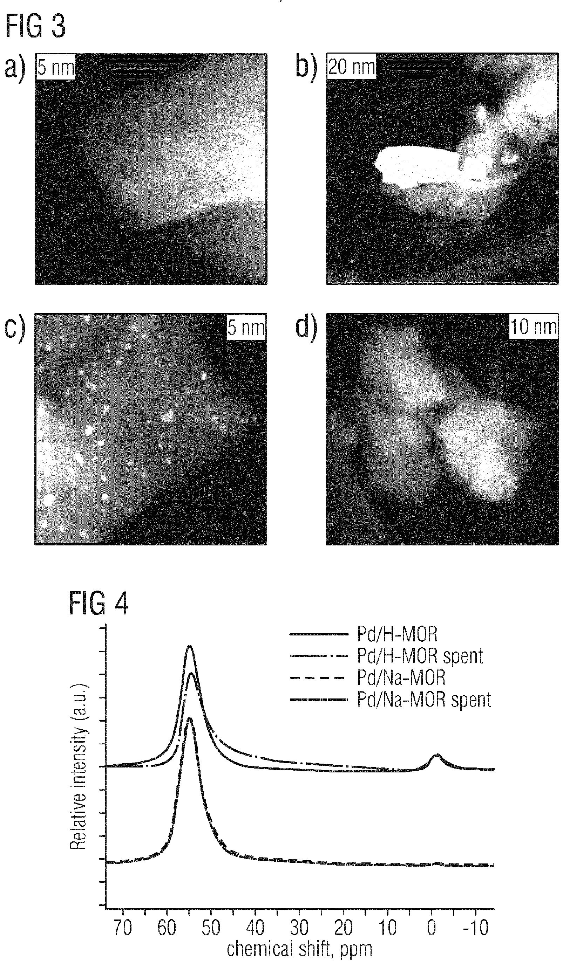

Figure 3 shows scanning transmission electron microscopy (STEM) images of the catalysts calcined at 500 °C and after 16 h on stream in 1 vol. % $CH_4$, 4 vol. % $O_2$, 5 vol. % $H_2O$, bal. $N_2$ at 415 °C (denoted as spent). The starting material (Pd/H-MOR, fig 3a) exhibited uniform small palladium nanoparticles with the mean diameter of 1.3 nm. Addition of sodium (Pd/Na-MOR, fig 3c) lead to a moderate aggregation of palladium and the mean diameter of the particles increased to 3.0 nm. STEM micrographs of the catalysts exposed to reaction conditions for 16 h reveal sintering of the active phase in Pd/H-MOR (Figure 3b) and formation of highly inhomogeneous particle size distribution from 3 to 50 nm, whereas no significant change in palladium dispersion was observed in Pd/Na-MOR (Figure 3d, an average of 3.0 nm for the calcined material and 4.4 nm and 4.6 nm for samples spent for 16 and 65 h, respectively).

The micrographs of Pd/Na-MOR (Figure 3c,d) exhibited a large fraction of palladium nanoparticles within the dark areas of the zeolite crystallites, which are typically recognized as mesopores. The native H-mordenite with a Si/Al ratio of 17 used in this study was dealuminated by the supplier and it is well-known that dealumination of zeolites produces poorly interconnected cavities. Exchange of sodium likely caused aggregation of palladium within such cavities of the support, trapping the active phase in a well-dispersed form within the zeolite. The acid sites which caused mobility of palladium were absent in Pd/Na-MOR and thus ensured that palladium was immobilized.

Figure 4 shows the $^{27}Al$ MAS NMR spectra of calcined Pd/H-MOR and Pd/Na-MOR and those after 16 h on stream (denoted as spent). Two distinct resonances were observed at chemical shifts of around 0 and 55 ppm. The former signal corresponds to the framework-associated octahedral aluminum ($Al_{oct}$) and the latter to the tetrahedral framework aluminum ($Al_T$). The intensity of the $Al_{oct}$ resonance can be used to qualitatively assess the acidity of the zeolite. After exchange with sodium (Pd/Na-MOR), the intensity of $Al_{oct}$ resonance was negligible, indicating almost complete exchange of the zeolite acid sites. The $Al_T$ resonance slightly increased after the addition of sodium, suggesting reinsertion of some aluminum in the framework. Spent Pd/H-MOR exhibited broadening and shift to lower values of the $Al_T$ resonance as a result of the enhanced disorder in the framework aluminum. On the contrary, no difference was observed in the spectra of Pd/Na-MOR, confirming stability of the framework aluminum under reaction conditions.

The observations that the activity of Pd/Na-zeolite is proportional to the sodium loading complement and extend the study of Montes de Corrrea et. al., who claimed that Na/Pd ratio is important, but contradict Maeda et. al., who concluded that presence of sodium has a detrimental effect on the activity of Pd/zeolite methane oxidation catalysts. The lack of control of alkali metal loading as well as incorrect way of exchanging it are the reasons why up to date metal-exchanged alkali-zeolites were not considered for potential application as oxidation catalysts. Additionally, the discrepancy in literature describing the performance of the metal-exchanged alkali-zeolites occurs due to the various pretreatments of the used zeolites, which will be discussed in detail in Example 2.

**Example 2**

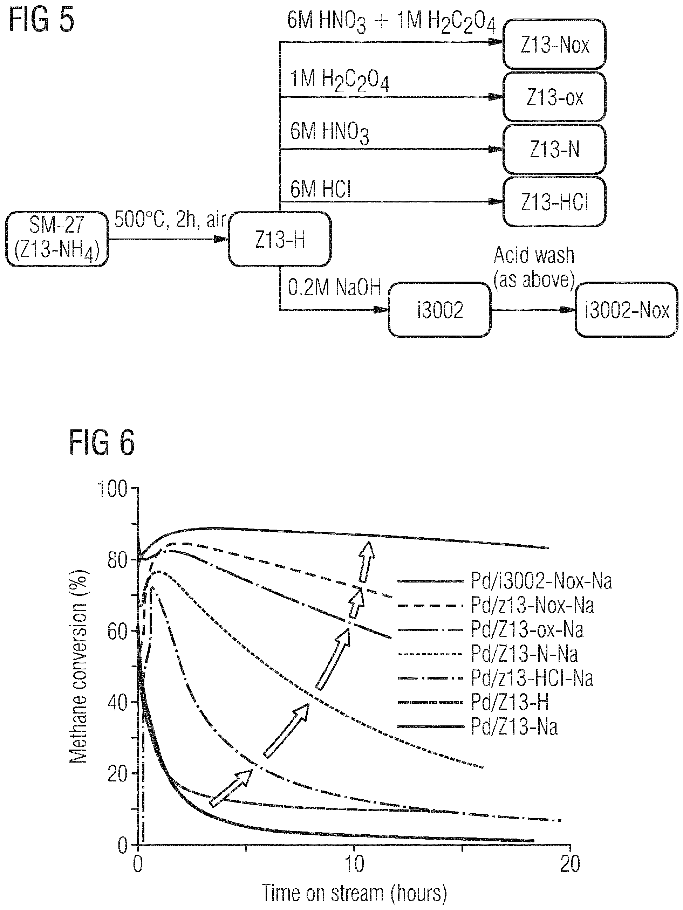

Figure 5 shows the overview of the various pretreatments performed on the starting conventional ZSM-5 zeolite (Clariant SM-27, Si/Al=13, $NH_4^+$-form). Briefly, the starting material was calcined to produce the H-form and then subjected to various acid treatments (hydrochloric, nitric and oxalic acids) and base-acid treatments with the goal to modify the aluminum distribution and pore structure of the zeolite. After these pretreatments, the materials were dried, exchanged with palladium, calcined and neutralized with sodium bicarbonate as described in Example 1.

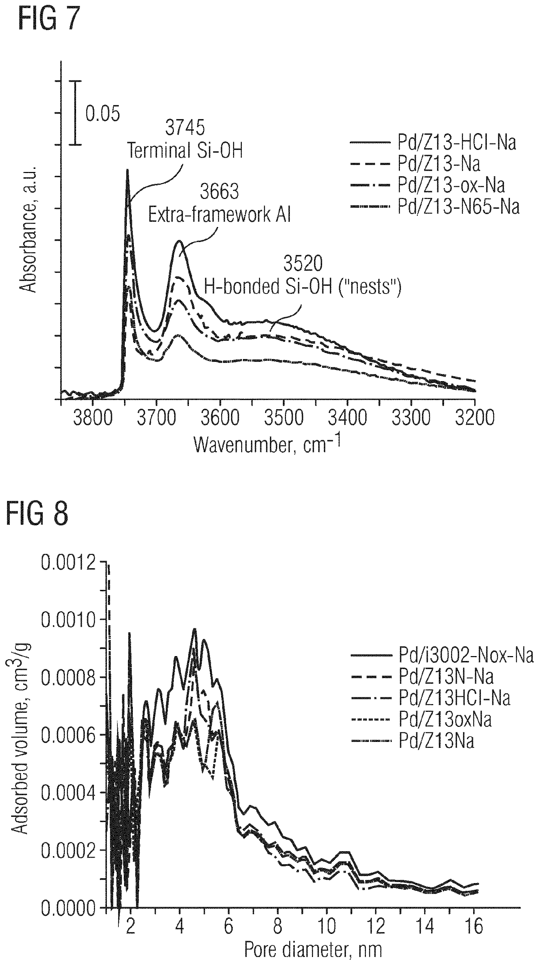

Figure 6 shows the stability test of the series of variously pretreated catalysts. Addition of sodium to the non-treated zeolite (Pd/Z13-Na) did not influence the initial activity, but resulted in more rapid deactivation compared to the H-form (Pd/Z13-H). The activity and stability of Pd/Na-ZSM-5 with various acid pretreatments was improved compared to the non-treated Pd/Z13-Na and increased in the row $HCl < HNO_3 < H_2C_2O_4 < HNO_3 + H_2C_2O_4$. Such behavior can be explained by the various aluminum extraction mechanisms by these acids, which are further elucidated using transmission IR spectroscopy under vacuum (Figure 7).

Treatment with oxalic acid (Pd/Z13-ox) yielded an increase in the band corresponding to the terminal Si-OH groups (3745 cm$^{-1}$) compared to the parent material (Pd/13-Na), suggesting that only surface framework aluminum was extracted from the zeolite. The band at 3663 cm$^{-1}$, corresponding to the extra-framework aluminum species (EFAL) slightly decreased, indicating their limited removal. On the contrary, pretreatment with nitric acid resulted in a more significant removal of EFAL (3663 cm$^{-1}$). No change in the amount of terminal Si-OH groups (3745 cm$^{-1}$) suggests that no surface framework dealumination occurred. A decrease in H-bonded Si-OH groups, or silanol "nests" (3520 cm$^{-1}$), can be explained by dissolution of framework silicon at low pH, which produces mesopores and removes H-bonded Si-OH groups. Similar effects of nitric and oxalic acid treatments were observed upon the treatment of mordenite by Giudici et. al. Hydrochloric acid treatment led to an increase in the amount of both terminal Si-OH groups (3745 cm$^{-1}$) and H-bonded Si-OH groups (3520 cm$^{-1}$), suggesting both surface and bulk framework Al extraction. No obvious change in the amount of EFAL was detected (3663 cm$^{-1}$). From the combination of the IR spectra (Figure 7) and the catalytic performance data (Figure 6), it can be concluded that the presence of EFAL species and surface framework aluminum have a detrimental effect on the activity and stability of the final Pd/Na-zeolite. Thus, pretreatment of the zeolite by the mixture of oxalic and nitric acids yielded even more active and stable catalyst compared to single acid treatments, since both EFAL and surface framework aluminum species were more efficiently removed.

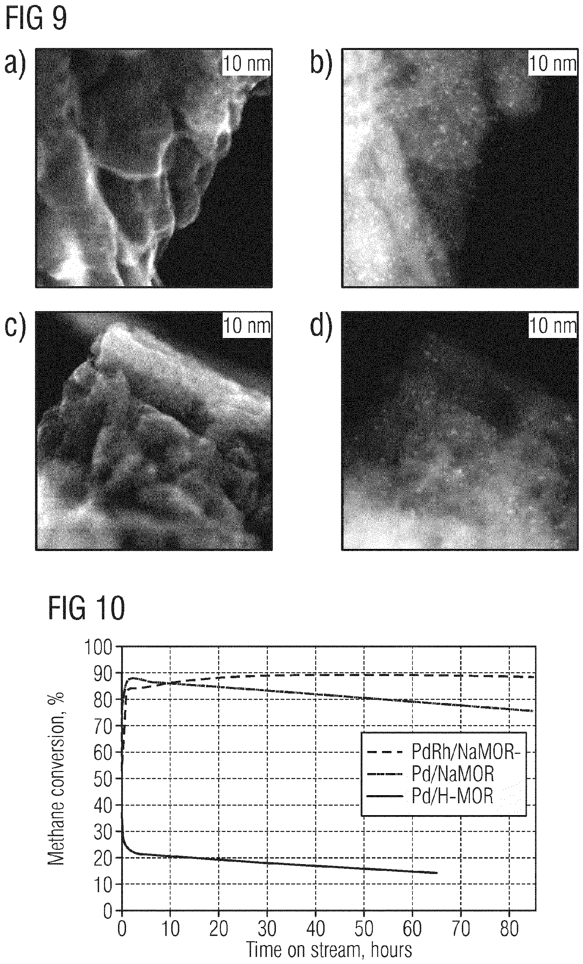

Figure 8 shows the pore size distribution obtained from fitting the argon physisorption isotherm using a Quantachrome DFT software package. The initial mesopore volume is attributed to the external surface of zeolite crystallites, or so-called intercrystalline mesoporosity. Individual acid treatments did not change the pore size distribution, whereas the base-acid treated sample (Pd/i3002-Nox-Na) exhibited additional porosity in the 2-10 nm region. Secondary electron and transmission electron micrographs of this sample before and after the catalytic test (Figure 9) show that palladium nanoparticles remained almost entirely within the zeolite crystallite. The mean diameter of these particles (ca. 3 nm) suggests that they cannot be located within the micropores of ZSM-5 (0.55 nm micropore diameter and 0.7 nm intersection diameter), hence these particles were located within the mesopores. The small mesopore volume which was generated by alkaline treatment (0.014 cm$^3$/g) suggests that these pores have poor connectivity and thus help to physically separate palladium nanoparticles from each other. This leads to improved stability of Pd/i3002-Nox-Na compared to microporous catalysts (Figure 6).

The example demonstrates that besides the alkali loading, the well-defined aluminium distribution and speciation, as well as the secondary pore structure of the zeolite are critical for the performance of the metal-exchanged alkali zeolites and can lead to more than hundredfold difference in the catalyst activity (Figure 6, after 20 h on stream). To our best knowledge, such detailed and systematic investigation has not yet been performed so far. The synthesis protocols, described in examples 1 and 2, enable the use of these materials as highly active and stable methane oxidation catalysts, which do not degrade by sintering and zeolite dealumination compared to the state of the art materials.

**Example 3**

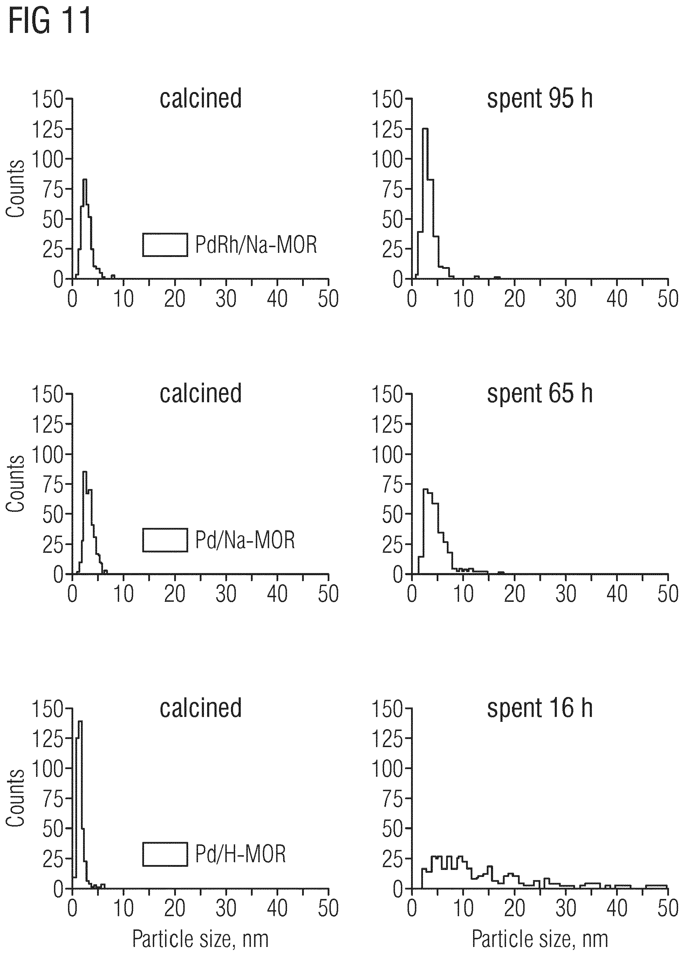

The temperature, at which the mobility of metal nanoparticles occurs, can be roughly estimated as half of the melting point of the metal or metal oxide (Tamman temperature). Increasing the Tamman temperature of the active phase can be beneficial for the catalyst stability. One way to do this is to use precious metal alloys. For instance, US patent application 2016/0059226 describes a bimetallic catalyst containing palladium and platinum supported on a high-silica zeolite. Figure 10 shows that simultaneous exchange of rhodium (0.1 wt. %) and palladium (1.0 wt. %) allows to further improve the stability of Pd/Na-MOR based catalyst from Example 1. The higher stability of the Pd-Rh catalyst compared to monometallic Pd catalyst origins from slower nanoparticle sintering (Figure 11). The particle size distribution in PdRh/Na-MOR did not at all change after 95 h on stream, whereas a slight increase in the mean diameter of palladium occurred in the monometallic catalyst (Pd/Na-MOR). The Tamman temperatures of both Pd (640°C) and PdO (240°C) are significantly lower than those of Rh (860°C) and $Rh_2O_3$ (415°C) . Therefore, addition of Rh to Pd/Na-MOR increases the Tamman temperature of the mixed Pd-Rh phase and allows to further reduce the mobility of small metal nanoparticles.

**Claims**

1. A catalytic material **characterized by** sintering-resistance of a highly dispersed active transition metal, especially in the presence of steam and at high temperatures, stabilized within a zeolitic support, in which the excess of the strong acidity of the zeolitic support is balanced by an alkali metal cation, such as Li, Na, K, Rb, Cs or a mixture thereof.

2. The material according to claim 1 which is **characterized by** the absence of strong acid sites, evidenced by the absence of desorption peaks above 250°C in an ammonia temperature-desorption experiment ($NH_3$-TPD) in a flow of an inert gas.

3. The material according to claims 1 to 2 which is essentially free of extra-framework heteroatoms and framework heteroatoms on the external surface of the zeolitic support.

4. The material according to claims 1 to 3 where the transition metal is Pd, Rh, Pt, Ir, Cr, Mn, Fe, Ni, Co, Au, Ag, Cu, Zn, Mo, Ce, V or a mixture thereof.

5. The material according to claims 1 to 4 where the framework-substituted heteroatom of the zeolitic support is chosen from the chemical elements of groups III and IV, preferably one or more of B, Al, Ga, Ti or Zr.

6. The material according to claims 1 to 5 where the zeolitic material exhibits an intracrystalline secondary pore structure with the miniumum pore diameter of at least two times larger than the zeolitic material micropore diameter.

7. The material according to claims 1 to 6 which is **characterized by** the chemical formula

$$A_k M^{z+}{}_{(1/z)} T_m Si_n O_{2\times(m+n)},$$

where A - alkali metal, M - active transition metal, T - framework-substituted heteroatom of the zeolitic support, z - oxidation number of the active transition metal M and the ratio $(k+l-z)/m = 1 \pm 0.2$.

8. A method for producing a precious metal/metal cation zeolite catalyst, hereinafter referred to as PM/MC-zeolite catalyst, preferably for catalytic complete methane oxidation, comprising the steps of:

   a) treating a parent zeolite under desilication conditions in order to form mesopores (hereinafter referred to as nanocages) resulting in a desilicated zeolite;
   b) treating the desilicated zeolite in order to selectively extract extra-framework aluminum and surface framework aluminum, respectively, resulting in an acidic H-zeolite;
   c) loading the acidic H-zeolite with a precious metal compound and optionally a promoter compound by ion-exchange, impregnation or other technique and subsequent calcination resulting in an acidic PM/H-zeolite;
   d) neutralizing the strong acid sites of the PM/H-zeolite by a basic alkali metal salt or a base, and thus stabilizing the precious metal within the nanocages of the zeolite.

9. The method according to claim 8, wherein the precious metal is palladium, platinum, rhodium or a mixture thereof.

10. The method according to claims 8 to 9, wherein the promoter is one or more of Ce, Co, Cr, Cu, Fe, La, Mn, Ni, Ti and Zn.

11. The method according to claims 8 to 10 wherein the parent zeolite framework structure is chosen from the family AEL, BEA, BEC, CHA, DAC, EON, EPI, FAU, FER, IMF, ISV, IWW, LTA, LTL, MAZ, MEL, MFI, MOR, MSE, RWR, STI and TUN.

12. The method according to claims 8 to 11 wherein the desilication is preferentially carried out under mild conditions.

13. The method according to claims 8 to 12 where the desilication preferentially produces a small amount (less than 0.1 cm$^3$/g) of mesopores (nanocages).

14. The method according to claims 8 to 13 where the treatment of the desilicated zeolite is carried out with nitric acid and oxalic acid.

15. The method according to claims 8 to 14 wherein the precious metal compound is a precious metal group ammine complex.

# FIG 1

# FIG 2

FIG 3

FIG 4

# FIG 5

SM-27 (Z13-NH$_4$) → 500°C, 2h, air → Z13-H

6M HNO$_3$ + 1M H$_2$C$_2$O$_4$ → Z13-Nox

1M H$_2$C$_2$O$_4$ → Z13-ox

6M HNO$_3$ → Z13-N

6M HCl → Z13-HCl

Z13-H → 0.2M NaOH → i3002 → Acid wash (as above) → i3002-Nox

# FIG 6

Methane conversion (%) vs Time on stream (hours)

—— Pd/i3002-Nox-Na
– – – Pd/z13-Nox-Na
–·– Pd/Z13-ox-Na
········· Pd/Z13-N-Na
–··– Pd/z13-HCl-Na
——— Pd/Z13-H
—— Pd/Z13-Na

## FIG 7

0.05

3745
Terminal Si-OH

3663
Extra-framework Al

3520
H-bonded Si-OH ("nests")

Absorbance, a.u.

Wavenumber, cm⁻¹

— Pd/Z13-HCl-Na
--- Pd/Z13-Na
-·- Pd/Z13-ox-Na
···· Pd/Z13-N65-Na

## FIG 8

Adsorbed volume, cm³/g

Pore diameter, nm

— Pd/i3002-Nox-Na
--- Pd/Z13N-Na
-·- Pd/Z13HCl-Na
···· Pd/Z13oxNa
···· Pd/Z13Na

## FIG 9

a)

10 nm

b)

10 nm

c)

10 nm

d)

10 nm

## FIG 10

- - - - PdRh/NaMOR-
- · - · - Pd/NaMOR
——— Pd/H-MOR

Methane conversion, %

Time on stream, hours

# FIG 11

Europäisches
Patentamt

European
Patent Office

Office européen
des brevets

# EUROPEAN SEARCH REPORT

Application Number

EP 17 17 4071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIJIAN ZHOU ET AL: "The synthesis of new coke-resistant support and its application in propane dehydrogenation to propene : New coke-resistant support", JOURNAL OF CHEMICAL TECHNOLOGY AND BIOTECHNOLOGY, vol. 91, no. 4, 15 April 2015 (2015-04-15), pages 1072-1081, XP055423951, ISSN: 0268-2575, DOI: 10.1002/jctb.4686 | 1-7 | INV.<br>B01J29/068<br>B01J29/22<br>B01J29/44<br>B01D53/94<br>B01J35/00<br>B01J35/10 |
| A | * abstract *<br>* page 1076, right-hand column; figures 2,4; table 1 *<br>* "Experiments" section *<br>----- | 8-15 | |
| X | YANG LOU ET AL: "Low-Temperature Methane Combustion over Pd/H-ZSM-5: Active Pd Sites with Specific Electronic Properties Modulated by Acidic Sites of H-ZSM-5", ACS CATALYSIS, vol. 6, no. 12, 19 October 2016 (2016-10-19), pages 8127-8139, XP055424116, US ISSN: 2155-5435, DOI: 10.1021/acscatal.6b01801 | 1-7 | |
| A | * abstract *<br>* Paragraph 2.1 "Catalyst preparation" *<br>----- | 8-15 | TECHNICAL FIELDS SEARCHED (IPC)<br><br>B01J<br>B01D |

-/--

The present search report has been drawn up for all claims

| Place of search | Date of completion of the search | Examiner |
|---|---|---|
| Munich | 16 November 2017 | Besselmann, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

Application Number

EP 17 17 4071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUI ET AL: "Use of multi-transition-metal-ion-exchanged zeolite 13X catalysts in methane emissions abatement", COMBUSTION AND FLAME, ELSEVIER SCIENCE PUBLISHING CO., INC., NEW YORK, NY.; US, AMSTERDAM, NL, vol. 153, no. 1-2, 6 February 2008 (2008-02-06), pages 119-129, XP022532823, ISSN: 0010-2180, DOI: 10.1016/J.COMBUSTFLAME.2007.12.003 | 1-7 | |
| A | * abstract * <br> * paragraph [3.2.2]; figure 2; table 1 * <br>----- | 8-15 | |
| X | KR 2017 0043143 A (GS CALTEX CORP [KR]) 21 April 2017 (2017-04-21) * claims; examples * <br>----- | 1-15 | |
| A | DATABASE WPI Week 201666 Thomson Scientific, London, GB; AN 2016-470625 XP002775610, -& CN 105 749 959 A (SHANGHAI ADVANCED RES INST CHINESE ACAD) 13 July 2016 (2016-07-13) * abstract * <br>----- | 1-15 | TECHNICAL FIELDS SEARCHED (IPC) |

-/--

The present search report has been drawn up for all claims

| Place of search | Date of completion of the search | Examiner |
|---|---|---|
| Munich | 16 November 2017 | Besselmann, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ELENI HERACLEOUS ET AL: "Microporous/Mesoporous Pt/ZSM-5 Catalysts for Hydroisomerization of BTL-naphtha", INDUSTRIAL & ENGINEERING CHEMISTRY RESEARCH., vol. 52, no. 41, 18 September 2013 (2013-09-18), pages 14567-14573, XP55317399, US ISSN: 0888-5885, DOI: 10.1021/ie402354t * abstract * | 1-15 | |

TECHNICAL FIELDS
SEARCHED      (IPC)

The present search report has been drawn up for all claims

| Place of search | Date of completion of the search | Examiner |
|---|---|---|
| Munich | 16 November 2017 | Besselmann, Sonja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 409 358 A1**

## ANNEX TO THE EUROPEAN SEARCH REPORT
## ON EUROPEAN PATENT APPLICATION NO.

EP 17 17 4071

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2017

| Patent document cited in search report | | Publication date | Patent family member(s) | Publication date |
|---|---|---|---|---|
| KR 20170043143 | A | 21-04-2017 | NONE | |
| CN 105749959 | A | 13-07-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160059226 A
- US 20160310895 A
- US 20160236147 A
- US 8685876 B
- US 9221038 B